(19) **Europäisches Patentamt / European Patent Office / Office européen des brevets**

(11) **EP 4 621 916 A1**

(12) **EUROPEAN PATENT APPLICATION**
published in accordance with Art. 153(4) EPC

(43) Date of publication:
**24.09.2025 Bulletin 2025/39**

(21) Application number: **23894740.2**

(22) Date of filing: **31.08.2023**

(51) International Patent Classification (IPC):
*H01M 10/0583* (2010.01)   *H01M 50/536* (2021.01)
*H01M 10/04* (2006.01)   *H01M 10/052* (2010.01)

(52) Cooperative Patent Classification (CPC):
**H01M 10/04; H01M 10/052; H01M 10/0583; H01M 50/536;** Y02E 60/10; Y02P 70/50

(86) International application number:
**PCT/KR2023/013003**

(87) International publication number:
**WO 2024/111808 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.11.2022 KR 20220157594**

(71) Applicant: **LG Energy Solution, Ltd.**
**Seoul 07335 (KR)**

(72) Inventors:
- **CHUNG, Kyusung**
  **Daejeon 34122 (KR)**
- **SHIN, Sewoo**
  **Daejeon 34122 (KR)**
- **OH, Jung Shik**
  **Daejeon 34122 (KR)**

(74) Representative: **Plasseraud IP**
**104 Rue de Richelieu**
**CS92104**
**75080 Paris Cedex 02 (FR)**

(54) **ELECTRODE ASSEMBLY MANUFACTURING DEVICE AND ELECTRODE ASSEMBLY MANUFACTURING METHOD**

(57) The present invention relates to an apparatus and method for manufacturing an electrode assembly.

[FIG. 2]

## Description

[Technical Field]

This application claims priority to and the benefit of Korean Patent Application No. 10-2022-0157594 filed with the Korean Intellectual Property Office on November 22, 2022, the entire contents of which are incorporated herein by reference.

The present invention relates to an apparatus and method for manufacturing an electrode assembly.

[Background Art]

Unlike primary batteries, secondary batteries may be rechargeable and have small scales and high capacities. Recently, research and development have been actively conducted on the secondary batteries. As development of technologies and demands for mobile devices are increased, there is a rapidly increasing demand for rechargeable batteries as energy sources.

The secondary batteries are classified into coin batteries, cylindrical batteries, angular batteries, and pouch-type batteries depending on shapes of battery casings. In the secondary battery, an electrode assembly mounted in the battery casing is a power generation element that has a structure made by stacking electrodes and separators and may be charged and discharged.

The electrode assemblies may be approximately classified into a Jelly-roll-type electrode assembly made by winding sheet-shaped positive and negative electrodes coated with active materials with a separator interposed therebetween, a stack-type electrode assembly made by sequentially stacking a plurality of positive and negative electrodes in a state in which separators are interposed between the plurality of positive and negative electrodes, and a stack-and-folding-type electrode assembly made by winding stack-type unit cells by using long separation films.

In this case, the stack-and-folding-type electrode assembly is manufactured by using a plurality of electrodes in a state in which separators are folded in a zigzag manner and positioned between the electrodes.

In this process, heat and pressure are applied to ensure a bonding force between the electrode and the separator. However, because the plurality of electrodes is used, there is a problem in that a large amount of time is required to apply heat and pressure to ensure the bonding force between the electrode and the separator, and the performance of the electrode assembly is not uniform because of non-uniformity of temperatures between the electrodes.

[Detailed Description of the Invention]

[Technical Problem]

An object of the present invention is to provide an apparatus and method for manufacturing an electrode assembly.

[Technical Solution]

An embodiment of the present invention provides a method of manufacturing an electrode assembly, in which a plurality of first electrodes including first electrode tabs and a plurality of second electrodes including second electrode tabs are alternately disposed between separators including folded binder layers, the method including, (a) supplying the first electrode to a stack table; (b) supplying the second electrode to the stack table; (c) supplying the separator to the stack table; (d) manufacturing a stack by stacking the first electrodes, the separators, and the second electrodes on the stack table so that the first electrodes and the second electrodes are alternately disposed between the folded separators; (e) preliminarily welding the first electrode tabs and the second electrode tabs; (f) heating the first electrodes and the second electrodes by heating preliminarily welded portions of the first electrode tabs and preliminarily welded portions of the second electrode tabs; and (g) heating and pressing the stack.

Another embodiment of the present invention provides an apparatus for manufacturing an electrode assembly, which manufactures an electrode assembly in which a plurality of first electrodes including first electrode tabs and a plurality of second electrodes including second electrode tabs are alternately disposed between separators including folded binder layers, the apparatus including: a stack table on which the first electrodes, the separators, and the second electrodes are stacked so that the stack in which the first electrodes and the second electrodes are alternately disposed between the folded separators is manufactured; a separator supply part configured to supply the separator to the stack table; a first electrode supply part configured to supply the first electrode to the stack table; a second electrode supply part configured to supply the second electrode to the stack table; a pressing part configured to heat and press the stack stacked on the stack table; a preliminary welding part configured to preliminarily weld the first electrode tabs and the second electrode tabs; and a heating part configured to heat the first electrodes and the second electrodes by heating preliminarily welded portions of the first electrode tabs and preliminarily welded portions of the second electrode tabs.

[Advantageous Effects]

The apparatus and method for manufacturing an electrode assembly according to the embodiment of the present application may reduce the amount of time required to manufacture the electrode assembly.

The apparatus and method for manufacturing an electrode assembly according to the embodiment of the present application may easily adjust a temperature of the electrode to a particular temperature range and reduce a temperature deviation between the electrodes, thereby providing the electrode assembly having uniform performance.

[Brief Description of Drawings]

FIGS. 1 and 14 are top plan views exemplarily illustrating an apparatus for manufacturing an electrode assembly according to an embodiment of the present invention.

FIG. 2 is a front view illustrating a concept of the electrode assembly manufacturing apparatus according to the embodiment of the present invention.

FIG. 3 is a cross-sectional view exemplarily illustrating a typical electrode assembly.

FIGS. 4 and 5 are views exemplarily illustrating a process to which a method of manufacturing an electrode assembly or the apparatus for manufacturing an electrode assembly according to the embodiment of the present invention is applied.

FIG. 6 is a conceptual view illustrating a pressing process of the method of manufacturing an electrode assembly or the apparatus for manufacturing an electrode assembly according to the embodiment of the present invention.

FIG. 7A is a perspective view illustrating a first pressing part 50 according to the embodiment of the present invention, and FIG. 7B is a perspective view illustrating a second pressing part 60 according to the embodiment of the present invention.

FIG. 8 is a perspective view illustrating a stack table of the apparatus for manufacturing an electrode assembly according to the embodiment of the present invention.

FIG. 9 is a perspective view illustrating a first electrode seating table of the apparatus for manufacturing an electrode assembly according to the embodiment of the present invention.

FIG. 10 is a perspective view illustrating a second electrode seating table of the apparatus for manufacturing an electrode assembly according to the embodiment of the present invention.

FIG. 11 is a perspective view illustrating a first suction head of the apparatus for manufacturing an electrode assembly according to the embodiment of the present invention.

FIG. 12 is a bottom plan view illustrating the first suction head of the apparatus for manufacturing an electrode assembly according to the embodiment of the present invention.

FIG. 13 is a top plan view illustrating a holding mechanism and the stack table of the apparatus for manufacturing an electrode assembly according to the embodiment of the present invention.

[Explanation of Reference Numerals and Symbols]

10: Electrode assembly
11: First electrode
11a: First electrode tab
12: Second electrode
12a: Second electrode tab
14: Separator
51: Gripper
51a: Main body
51b: Fixing part
100: Apparatus for manufacturing electrode assembly
110: Stack table
111: Table body
112: Stack table heater
120: Separator supply part
121: Separator heating part
122: Separator roll
130: First electrode supply part
131: First electrode seating table
132: First electrode heater
133: First electrode roll
134: First cutter
135: First conveyor belt
136: First electrode supply head
140: Second electrode supply part
141: Second electrode seating table
142: Second electrode heater
143: Second electrode roll
144: Second cutter
145: Second conveyor belt
146: Second electrode supply head
150: First electrode stacking part
151: First suction head
151a: Vacuum inlet
151b: Bottom surface
152: First head heater
153: First movement part
160: Second electrode stacking part
161: Second suction head
162: Second head heater
163: Second movement part
170: Holding mechanism
171: First holding mechanism
172: Second holding mechanism
180: Pressing part
181: First pressing block
182: Second pressing block
183, 184: Pressing heater
190: Preliminary welding part
191: Heating part
191a: Heating wire probe
191b: Heating wire gripper
S: Stack
A: Thermal imaging camera

[Best Mode]

Hereinafter, the present invention will be described in detail so that those with ordinary skill in the art to which the present invention pertains may easily carry out the present invention. However, the present invention may be implemented in various different ways and is not limited to the embodiments described herein.

Throughout the specification, unless explicitly described to the contrary, the word "comprise" or "include" and variations, such as "comprises", "comprising", "includes" or "including", means the further inclusion of stated constituent elements, not the exclusion of any other constituent elements.

In the present specification, the "holding mechanism" serves to grip the stack stacked on the stack table in order to stack the first electrode or the second electrode during the process of manufacturing the stack in which the first electrode, the separator, and the second electrode are stacked such that the first electrode and the second electrode are alternately disposed between the folded separators on the stack table. The holding mechanism is different in function from the gripper that grips the stack during the process of heating and pressing the stack.

In the present specification, the term "preliminary welding" means a process of welding an electrode tab and an electrode tab.

In the present specification, the term "final welding" means a process of welding the electrode tab and an electrode lead.

## <METHOD OF MANUFACTURING ELECTRODE ASSEMBLY>

An embodiment of the present invention relates to a method of manufacturing an electrode assembly in which a plurality of first electrodes including first electrode tabs and a plurality of second electrodes including second electrode tabs are alternately disposed between separators including folded binder layers. The embodiment of the present invention provides a method of manufacturing an electrode assembly including steps (a) to (g). The main feature includes steps (e) to (g).

In the embodiment of the present invention, step (f) of heating the first electrodes and the second electrodes by heating preliminarily welded portions of the first electrode tabs and preliminarily welded portions of the second electrode tabs means a process of heating the entire electrodes through conduction of heat applied to the electrode tabs.

In the embodiment of the present invention, step (e), which is a step of preliminarily welding the first electrode tabs and the second electrode tabs, may mean a step of preliminarily welding the first electrode tabs and the second electrode tabs included in a stack.

In the embodiment of the present invention, a step of heating the first electrodes and the second electrodes may mean a step of heating the first electrodes and the second electrodes included in the stack. In addition, the supplied electrodes may respectively include the electrode tabs.

In the present specification, a configuration in which the first electrode and the second electrode are stacked such that the first electrode and the second electrode are alternately disposed between the folded separators is referred to as zigzag stacking.

The present invention is characterized in that the stack is manufactured by stacking the first electrodes, the separators, and the second electrodes on a stack table so that the first electrodes and the second electrodes are alternately disposed between the folded separators, the electrode tabs of the electrodes are preliminarily welded, and then temperatures of the electrodes in the stack are adjusted by using the preliminarily welded portions before the preliminarily welded portions are cut. That is, the present invention is characterized in that the electrodes in the stack are heated by applying heat to the preliminarily welded portion.

Therefore, the method of manufacturing an electrode assembly of the present invention may reduce the amount of time required to manufacture the electrode assembly and easily adjust the temperature of the electrode to a particular temperature range. Therefore, a temperature deviation between the electrodes in the manufactured electrode assembly may be reduced, and the electrode assembly having uniform performance may be provided.

In addition, the use of the bonding force of the separator including the binder layer may align and fix the positions of the electrodes of the electrode assembly without distorting the positions of the electrodes, which may improve energy density.

In the embodiment of the present invention, the separator may include the binder layer. The binder layer may include one or more particulate binder resins and one or more inorganic particles.

More specifically, in the embodiment of the present invention, the separator may include a porous polymer substrate and an organic/inorganic composite porous coating layer formed on at least one side surface of the polymer substrate. The organic/inorganic composite porous coating layer may include one or more particulate binder resins and one or more inorganic particles.

In the embodiment of the present invention, the inorganic particles included in the organic/inorganic composite porous coating layer are not particularly limited as long as the inorganic particles are stable electrochemically. That is, the inorganic particles are not particularly limited as long as an oxidation and/or reduction reaction does not occur within an operating voltage range (e.g., 0 to 5 V based on $Li/Li^+$) of an applied electrochemical element. In particular, in case that inorganic particles having ion transfer capacities are used, ionic conductance in the electrochemical element may be increased, which may improve the performance. In addition, in case that high-dielectric inorganic particles are used as the inorganic particles, the inorganic particles may contribute to an increase in dissociation of electrolyte salts, e.g., lithium salts in a liquid electrolyte, thereby improving ionic conductance of the electrolyte.

For the above-mentioned reasons, the inorganic particles may include high-dielectric inorganic particles having a dielectric constant of 5 or more or 10 or more, inorganic particles having lithium ion transfer capacities, or mixtures thereof. As non-restrictive examples of inorganic particles having a dielectric constant of 5 or more, $BaTiO_3$, $Pb(Zr, Ti) O_3$ (PZT), $Pb_{1-x}La_xZr_{1-y}Ti_yO_3$ (PLZT, here, $0<x<1$, $0<y<1$), $Pb (Mg_{1/3}Nb_{2/3})O_3$-$PbTiO_3$ (PMN-PT), hafnia ($HfO_2$), $SrTiO_3$, $SnO_2$, $CeO_2$, MgO, NiO, CaO, ZnO, $ZrO_2$, $Y_2O_3$, $Al_2O_3$, SiC, $TiO_2$, and the like may be used alone or in combination of two or more types of these materials. In addition, the synergistic effects may be doubled in case that the above-mentioned high-dielectric inorganic particles and the inorganic particles having the lithium ion transfer capacities are mixed.

Non-restrictive examples of the inorganic particles having the lithium ion transfer capacities include lithium phosphate (Li3PO4), lithium titanium phosphate ($Li_xTi_y(PO_4)_3$, $0<x<2$, $0<y<3$), lithium aluminum titanium phosphate ($Li_xAl_yTi_z(PO_4)_3$, $0<x<2$, $0<y<1$, $0<z<3$), $(LiAlTiP)_xO_y$-based glass ($0<x<4$, $0<y<13$) such as $14Li_2O$-$9Al_2O_3$-$38TiO_2$-$39P_2O_5$, lithium lanthanide titanate ($LixLayTiO_3$, $0<x<2$, $0<y<3$), lithium germanium thiophosphate ($Li_xGe_yP_zS_w$, $0<x<4$, $0<y<1$, $0<z<1$, $0<w<5$) such as $Li_{3.25}Ge_{0.25}P_{0.75}S_4$, lithium nitride ($Li_xN_y$, $0<x<4$, $0<y<2$) such as $Li_3N$, $SiS_2$-based glass ($Li_xSi_yS_z$, $0<x<3$, $0<y<2$, $0<z<4$) such as $Li_3PO_4$-$Li_2S$-$SiS_2$, $P_2S_5$-based glass ($Li_xP_yS_z$, $0<x<3$, $0<y<3$, $0<z<7$) such as $LiI$-$Li_2S$-$P_2S_5$, or mixtures thereof.

In the organic/inorganic composite porous coating layer, a content ratio of the inorganic particles may be determined in consideration of a thickness, a pore size, and porosity of the finally manufactured organic/inorganic composite porous coating layer, and the inorganic particles may be included in a range of 70 to 99 wt.% based on 100 wt.% of the porous coating layer on the basis of a weight ratio. In case that the content of the inorganic particles is less than 70 wt.%, the heat resistance may deteriorate. In contrast, in case that the content of the inorganic particles is excessively high, the bonding force of the porous coating layer may decrease because the amount of binders is excessively small.

In the embodiment of the present invention, the particulate binder resin may include one or more types of particles selected from a group consisting of fluorine-based polymer/acrylic-based polymer particles and hybrid polymer particles of acrylic-based polymer. Because the binder resin includes fluorine-based polymer/acrylic-based polymer particles or hybrid polymer particles of acrylic-based polymer, the bonding force of the separator may be maintained at a predetermined level or higher before and after impregnation with the electrolyte. This means that the stability of the shape of the electrode assembly may be improved. Therefore, it is easier to provide the electrode assembly with the uniform performance.

In the embodiment of the present invention, the fluorine-based polymer may be a homopolymer of vinylidene fluoride, a copolymer of vinylidene fluoride and hexafluoropropylene, or a mixture of two or more thereof. Because the fluorine-based polymer is insoluble in the electrolyte, the hybrid polymer particles are impregnated with the electrolyte even though the acrylic-based polymers are simultaneously included, such that the bonding force may be maintained, which may maintain the shape.

More specifically, the acrylic-based polymer, which constitutes the hybrid polymer particles, and the acrylic-based polymer, which constitutes the acrylic-based polymer particles, may each include alkyl (meth) acrylate repeating unit having an alkyl group having a carbon number of 1 to 18 independently of each other. The acrylic-based polymer particles may contribute to maintaining the bonding force of the separator with respect to the electrode in a state in which the acrylic-based polymer particles are impregnated with the electrolyte, i.e., a dry state.

In the embodiment of the present invention, the first electrode may be configured as a positive electrode, and the second electrode may be configured as a negative electrode, but the present invention is not necessarily limited thereto. For example, the first electrode may be configured as a negative electrode, and the second electrode may be configured as a positive electrode. Therefore, in the embodiment of the present invention, the first electrode tab may be configured as a positive electrode tab, and the second electrode tab may be configured as a negative electrode tab, but the present invention is not necessarily limited thereto. For example, the first electrode tab may be configured as a negative electrode tab, and the second electrode tab may be configured as a positive electrode tab.

In the embodiment of the present invention, the first electrodes and the second electrodes may respectively include the first electrodes and the second electrode tabs, and the first and second electrode tabs may each be a positive electrode tab or a negative electrode tab as described above.

In the embodiment of the present invention, in step (f), the first electrodes and the second electrodes may be heated so that temperatures of the first electrodes and the second electrodes each satisfy Expression 1 below.

$$[\text{Expression 1}]$$

$$Tg-1 < T \le Tg+1$$

In Expression 1, Tg represents a glass transition temperature of the binder layer of the separator, and T represents a temperature of the heated first electrode or the heated second electrode.

In case that the temperature range is satisfied, a process speed of the method of manufacturing an electrode assembly of the present invention may be more effectively reduced. Therefore, the manufactured electrode assembly may have a small deviation of the bonding force, excellent ventilation and performance, and uniform performance.

In the embodiment of the present invention, step (f) may include a step of measuring a temperature distribution on an upper surface of the stack, a step of setting a heating temperature on the basis of the measured temperature distribution, and a step of heating the first electrode and the second electrode. That is, the heating temperature may be set to measure the temperature distribution on the upper surface of the stack and adjust a temperature of the electrode to a particular temperature by using the temperature distribution. In this case, the condition of Expression 1 may be satisfied during a process of adjusting the temperature of the electrode to the particular temperature.

Therefore, the process speed of the method of manufacturing an electrode assembly of the present invention may be more effectively reduced. Therefore, the manufactured electrode assembly may have a small deviation of the bonding force, excellent ventilation and performance, and uniform performance.

In the embodiment of the present invention, step (f) may be performed by a heating wire probe or a heating wire gripper.

That is, in the embodiment of the present invention, in step (f), the heating may be performed as the heating wire probes or the heating wire grippers are respectively connected to the first electrode tab and the second electrode tab.

In the embodiment of the present invention, heat, which is generated by the heating wire probe or the heating wire gripper, may be transferred to the first electrode and the second electrode through the first electrode tab and the second electrode tab.

In the embodiment of the present invention, a thickness of the stack may be 1,000 $\mu$m or more and 50,000 $\mu$m or less. The thickness of the stack means a thickness of an electrode part of the electrode. The electrode part means a part of the electrode that is not an electrode tab part but is a part in which an electrode current collector is formed and the electrode current collector is coated with an active material.

In the embodiment of the present invention, a thickness of the electrode tab part may be 10 $\mu$m or more and 1,000 $\mu$m or less. The electrode tab part means a region corresponding to the electrode tab of the electrode including the electrode tab. The thickness of the electrode tab part may be determined on the basis of the number of stacked electrodes.

In the embodiment of the present invention, in case that a thickness of the stack is 1,000 $\mu$m or more and 3,000 $\mu$m or less, the step of heating the first electrodes and the second electrodes by heating the preliminarily welded portions of the first electrode tabs and the preliminarily welded portions of the second electrode tabs may be performed by the heating wire probe.

In the embodiment of the present invention, in case that the thickness of the stack is 3,000 $\mu$m or more and 50,000 $\mu$m or less, the step of heating the first electrodes and the second electrodes by heating the preliminarily welded portions of the first electrode tabs and the preliminarily welded portions of the second electrode tabs may be performed by the heating wire gripper.

In the embodiment of the present invention, the stack is not heated nor pressed while the step of heating the first electrode and the second electrode is performed.

In another embodiment of the present invention, the stack may be heated and pressed may be performed simultaneously with the step of heating the first electrode and the second electrode.

That is, in the embodiment of the present invention, steps (f) and (g) may be selectively performed sequentially, in the reverse order, or simultaneously.

In addition, in the embodiment of the present invention, the step of heating the first electrode and the second electrode may adjust a temperature to be raised on the basis of a surface temperature of the stack set before the stack is pressed.

That is, in case that the thickness of the stack is not relatively large, the temperature range of the electrode in the stack may be adjusted only by the heating wire probe. However, in case that the thickness of the stack is a predetermined thickness or larger, a separate device such as the heating wire gripper may be required.

In the embodiment of the present invention, a position at which the preliminary welding is performed may be a position at which spacing distances from an end of the electrode assembly to the electrode tabs are each 20% or more of a thickness of the electrode assembly.

In case that the position at which the preliminary welding is performed is excessively close to the end of the electrode assembly, the electrode assembly may be damaged. Therefore, it is advantageous to satisfy the range in terms of the performance of the battery.

In the embodiment of the present application, step (e) may be performed on the stack table.

In another embodiment of the present application, step (g) may be performed on a pressing part. The description of the pressing part of the apparatus for manufacturing an electrode assembly may be applied to the description of the pressing part.

In the embodiment of the present application, step (g) may include a first heating/pressing step of gripping the stack with a gripper and heating and pressing the stack, and a second heating/pressing step of stopping the gripping with the gripper and heating and pressing the stack after the first heating/pressing step.

In the embodiment of the present application, the first heating/pressing step may include fixing the stack by pressing the upper surface of the stack by using the gripper, moving the stack fixed by the gripper between a pair of pressing blocks including pressing heaters, surface-pressing the fixed stack by moving the pair of pressing blocks in a direction in which the pair of pressing blocks faces each other along a stack axis of the stack, and heating the fixed stack by using the pressing heaters.

In the embodiment of the present application, the second heating/pressing step may include stopping the heating and pressing of the stack after the first heating/pressing step, spacing the gripper apart from the stack, moving the stack, which is spaced apart from the gripper, between the pair of pressing blocks including the pressing heaters, pressing the stack by moving the pair of pressing blocks in the direction in which the pair of pressing blocks faces each other along the stack axis of the stack spaced apart from the gripper, and heating the stack by using the pressing heaters.

In the embodiment of the present application, the pressing block used in the first heating/pressing step may have a groove corresponding to the gripper.

In the embodiment of the present application, the spacing of the gripper apart from the stack may include stopping the pressing of the upper surface of the stack by using the gripper, and spacing the gripper apart from the stack.

In addition, the moving of the stack between the pair of pressing blocks including the pressing heaters in the heating/pressing step (including the first and second heating/pressing steps) may include not only moving the stack but also moving the stack together with the stack table in a state in which the stack is placed on the stack table. In this case, the objects to be heated and pressed by the pair of pressing blocks and the pressing heaters may mean the stack and the stack table.

In the embodiment of the present invention, the method may further include cutting a part of the preliminarily welded portion after step (g).

In the embodiment of the present invention, the method may further include performing final welding for connecting electrode leads to the first electrode tab and the second electrode tab after step (f).

The heating process using the preliminarily welded portion may use a larger area than a heating process using a finally welded part, such that the heating process is further facilitated. As a result, the heating process needs to be performed before the final heating and pressing processes in order to achieve the effect of the present invention.

According to the embodiment of the present invention, the preliminary welding and the final welding may each be performed by ultrasonic welding. The ultrasonic welding refers to a technique for welding metallic materials by generating ultrasonic vibration of 10 to 75 kHz and using frictional heat generated by ultrasonic vibration between the metallic materials. That is, during the final welding, when ultrasonic vibration is applied by an ultrasonic welding device in a state in which the electrode tab and the electrode lead are in contact with each other, frictional heat is generated from a contact surface between the electrode tab and the electrode lead, and the electrode tab and the electrode lead are welded to each other by the frictional heat. To this end, an ultrasonic welding device, which is typically used in the corresponding field, may be used.

In addition, the description of the final welding may be applied to the description of the preliminary welding except for a state in which the electrode tab and the electrode tab are in contact with each other.

## <APPARATUS FOR MANUFACTURING ELECTRODE ASSEMBLY>

The embodiment of the present invention provides an apparatus for manufacturing an electrode assembly, which manufactures an electrode assembly in which the plurality of first electrodes including the first electrode tabs and the plurality of second electrodes including the second electrode tabs are alternately disposed between the separators including the folded binder layers, the apparatus including the stack table on which the first electrodes, the separators, and the second electrodes are stacked so that the stack in which the first electrodes and the second electrodes are alternately disposed between the folded separators is manufactured, a separator supply part configured to supply the separator to the stack table, a first electrode supply part configured to supply the first electrode to the stack table, a second electrode supply part configured to supply the second electrode to the stack table, a pressing part configured to heat and press the stack stacked on the stack table, a preliminary welding part configured to preliminarily weld the first electrode tabs and the second electrode tabs, and a heating part configured to heat the first electrodes and the second electrodes by heating the preliminarily welded portions of the first electrode tabs and the preliminarily welded portions of the second electrode tabs.

In the present specification, the term "part" means an interface that performs a particular function in the apparatus for manufacturing an electrode assembly.

That is, in the present specification, the term "heating part" means an interface for performing a function of adjusting temperatures of the first electrodes and the second electrodes to a particular range by using the first and second electrode tabs.

In the embodiment of the present application, the temperatures of the first electrodes and the second electrodes heated by the heating part may each satisfy Expression 1 below.

In the embodiment of the present application, the apparatus may further include a heating control part configured to measure a temperature distribution on the upper surface of the stack and set a heating temperature condition before the heating process is performed by the heating part. That is, in the present specification, the term "heating control part" means an interface for performing the function of measuring the temperature distribution on the upper surface of the stack and setting the heating temperature condition before the heating process is performed by the heating part.

In the embodiment of the present application, the heating part may be a heating wire probe or a separate heating wire gripper attached to one surface of the pressing part. In this regard, the above-mentioned description in which the heating wire probe or the separate heating wire gripper is used depending on the thickness of the stack may be applied.

In the embodiment of the present application, the pressing part may include the pair of pressing blocks, and the pair of pressing blocks may surface-press the stack stacked on the table while moving in the direction in which the pair of pressing blocks faces each other.

In the present specification, the separator may be supplied in the form of a separator sheet.

[Mode for Invention]

Hereinafter, an apparatus and method for manufacturing an electrode assembly according to an embodiment of the present invention will be described in more detail.

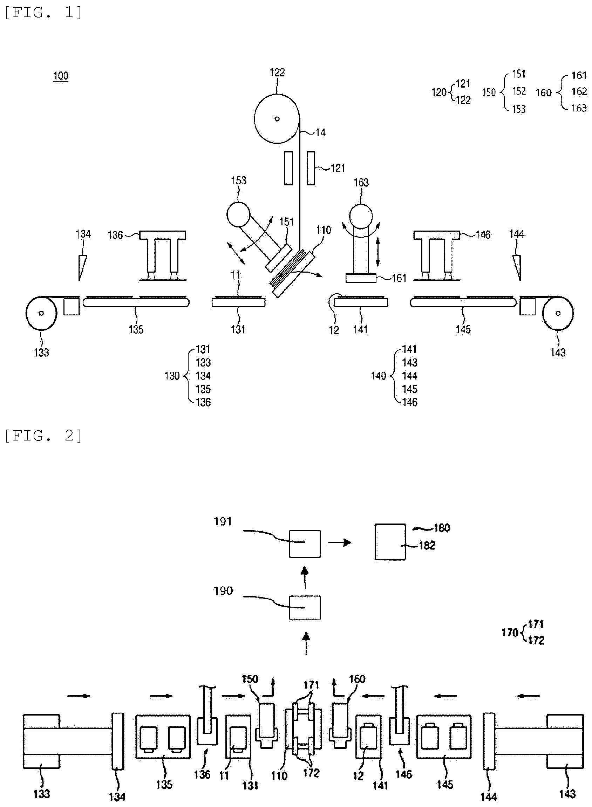

FIG. 1 is a top plan view exemplarily illustrating an apparatus for manufacturing an electrode assembly according to an embodiment of the present invention, and FIG. 2 is a front view illustrating a concept of the apparatus for manufacturing an electrode assembly according to the embodiment of the present invention. In this case, for convenience, a holding mechanism 170, a preliminary welding part 190, and a heating part 191, which are illustrated in FIG. 2, are omitted from FIG. 1, a pressing part 180 positioned at a rear side of the top plan view is indicated by the dotted line, and a separator supply part 120 illustrated in FIG. 1 is omitted from FIG. 2.

With reference to FIGS. 1 and 2, an apparatus 100 for manufacturing an electrode assembly according to an embodiment of the present invention includes a stack table 110, the separator supply part 120 configured to supply a separator 14 while heating the separator 14, a first electrode supply part 130 configured to supply a first electrode 11 while heating the first electrode 11, a second electrode supply part 140 configured to supply a second electrode 12 while heating the second electrode 12, a first electrode stacking part 150 configured to stack the first electrode 11 on the stack table 110, a second electrode stacking part 160 configured to stack the second electrode 12 on the stack table 110, and the pressing part 180 configured to bond the first electrode 11, the separator 14, and the second electrode 12. In addition, the apparatus 100 for manufacturing an electrode assembly according to the embodiment of the present invention may further include the holding mechanism 170 configured to fix the first electrode 11 and the second electrode 12 stacked on the stack table 110. In addition, the apparatus further includes the preliminary welding part 190 configured to preliminarily weld the first electrode tabs and the second electrode tabs included in the stack, and the heating part 191 configured to heat the first electrodes and the second electrodes included in the stack by heating the preliminarily welded portions of the first electrode tabs and the preliminarily welded portions of the second electrode tabs.

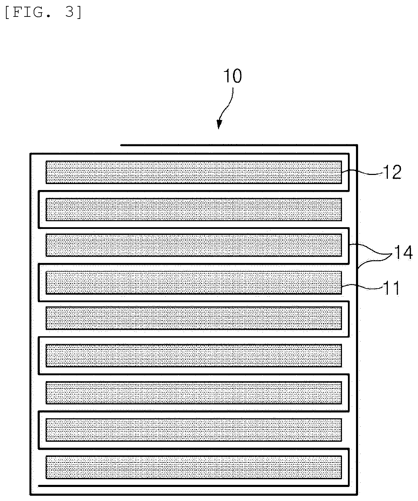

FIG. 3 is a cross-sectional view exemplarily illustrating an electrode assembly manufactured by the apparatus for manufacturing an electrode assembly or the method of manufacturing an electrode assembly according to the embodiment of the present invention.

With reference to FIGS. 1 to 3, the apparatus 100 for manufacturing an electrode assembly according to the embodiment of the present invention refers to an apparatus for manufacturing an electrode assembly 10 by stacking the first electrode 11, the separator 14, and the second electrode 12.

With reference to FIG. 3, the electrode assembly 10 may be a power generation element that may be charged or discharged. The electrode assembly 10 may be provided in the form in which the first electrode 11, the separator 14, and the second electrode 12 are alternately stacked and coupled. In this case, for example, the electrode assembly 10 may be provided in the form in which the separators 14 are folded in a zigzag manner, and the first electrodes 11 and the second electrodes 12 are alternately disposed between the folded separators 14. In this case, the separator 14 may surround an outermost periphery of the electrode assembly 10.

Meanwhile, the first electrode supply part 130 may further include a first electrode roll 133 around which the first electrode 11 is wound in the form of a sheet, a first cutter 134 configured to form the first electrode 11 having a predetermined size by cutting the first electrode 11 at a predetermined interval when the first electrode 11 wound in the form of the sheet around the first electrode roll 133 is unwound and supplied, a first conveyor belt 135 configured to move the first electrode 11 cut by the first cutter 134, and a first electrode supply head 136 configured to suck the first electrode 11, which is conveyed by the first conveyor belt 135, by vacuum and seat the first electrode 11 on a first electrode seating table 131. In this case, the first cutter 134 may cut the first electrode 11 having a sheet shape so that the first electrode tab protrudes from an end of the first electrode 11.

The second electrode supply part 140 may further include a second electrode roll 143 around which the second electrode 12 is wound in the form of a sheet, a second cutter 144 configured to form the second electrode 12 having a predetermined size by cutting the second electrode 12 at a predetermined interval when the second electrode 12 wound in the form of a sheet around the second electrode roll 143 is unwound and supplied, a second conveyor belt 145 configured to move the second electrode 12 cut by the second cutter 144, and a second electrode supply head 146 configured to suck the second electrode 12, which is conveyed by the second conveyor belt 145, by vacuum and seat the second electrode 12 on a second electrode seating table 141. In this case, the second cutter 144 may cut the second electrode 12 having a sheet shape so that the second electrode tab protrudes from an end of the second electrode 12.

An operation of the apparatus 100 for manufacturing an electrode assembly according to the embodiment of the present invention will be described with reference to FIGS. 1 to 3. The separator 14 wound around a separator roll 122 is supplied while passing through a separator heating part 121. That is, the separator 14 is heated while passing through the separator heating part 121, and the heated separator 14 is supplied to the stack table 110. The separator 14, which is supplied as described above, is stacked on the stack table 110, and the separator 14 is heated by the heated stack table 110.

Further, when the first electrode 11 is heated and supplied from the first electrode supply part 130 to the first electrode stacking part 150, the first electrode stacking part 150 stacks the first electrode 11 on the upper surface of the separator 14 stacked on the stack table 110 while heating the first electrode 11.

In this case, the holding mechanism 170 presses an upper surface of the first electrode 11, thereby fixing the first electrode 11 so that the first electrode 11 does not separate from the stack table 110.

Thereafter, when the stack table 110 rotates in the direction toward the second electrode stacking part 160, the separator 14 is continuously supplied and covers the upper surface of the first electrode 11.

Further, the second electrode stacking part 160 stacks the second electrode 12, which is heated and supplied from the second electrode supply part 140, on a portion of the separator 14 that covers the upper surface of the first electrode 11. In this case, the second electrode stacking part 160 continuously heats the second electrode 12 as a second suction head 161 presses and heats the second electrode 12.

In this case, the holding mechanism 170, which presses the upper surface of the first electrode 11, moves away from a pressing portion and then presses an upper surface of the second electrode 12, thereby preventing the stack including the second electrode 12 from separating from the stack table 110.

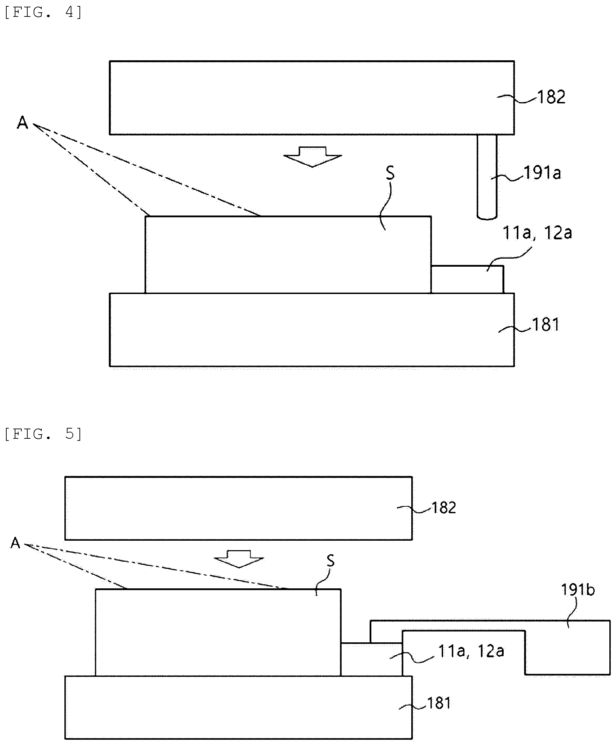

Thereafter, the process of stacking the first electrode 11 and the second electrode 12 is repeated, such that the separator 14 is folded in a zigzag manner, and the stack may be formed in which the separator 14 is positioned between the first electrode 11 and the second electrode 12. In this case, as illustrated in FIG. 4, according to the method of manufacturing an electrode assembly or the apparatus for manufacturing an electrode assembly according to the embodiment of the present invention, in case that a thickness of the stack is 1,000 $\mu$m or more and 3,000 $\mu$m or less (a thickness of the stack is relatively small), the step of heating the first electrodes 11 and the second electrodes 12 included in the stack S by heating the preliminarily welded portions of the first electrode tabs 11a and the preliminarily welded portions of the second electrode tabs 12a may perform the heating process by using a heating wire probe 191a attached to an upper pressing block 182 of a pair of pressing blocks 181 and 182 that constitutes the pressing part 180. Specifically, the stack S includes electrode tabs 11a and 12a corresponding in number to the stacked electrodes, and a single group is formed as the electrode tabs 11a and 12a are preliminarily welded by the preliminary welding part 190. Thereafter, the stack S is moved to the pressing part 180 without cutting the preliminarily welded portion, and the heating wire probe 191a may come into contact with and heat the preliminarily welded portions of the electrode tabs 11a and 12a of the stack. In this case, a temperature condition for performing the heating process may be set by a thermal imaging camera A. More specifically, the temperature condition may be set on the basis of a surface temperature of the stack S made before the stack S is pressed. In addition, the heating wire probe 191a attached to the upper pressing block 182 comes into contact with the stack S in advance before the stack S is pressed by the pair of pressing blocks 181 and 182.

In the present specification, for convenience, the shape of the heating wire probe of the pressing part is omitted, except for FIG. 4.

In addition, as illustrated in FIG. 5, according to the method of manufacturing an electrode assembly or the apparatus for manufacturing an electrode assembly according to the embodiment of the present invention, in case that the thickness of the stack is 3,000 $\mu$m or more and 50,000 $\mu$m or less (the thickness of the stack is relatively large), the step of heating the first electrodes 11 and the second electrodes 12 included in the stack S by heating the preliminarily welded portions of the first electrode tabs 11a and the preliminarily welded portions of the second electrode tabs 12a may perform the heating process by using a heating wire gripper 191b. Specifically, the stack S includes the electrode tabs 11a and 12a corresponding in number to the stacked electrodes, and the single group is formed as the electrode tabs 11a and 12a are preliminarily welded by the preliminary welding part 190. Thereafter, the stack S is moved to the pressing part 180 without cutting the preliminarily welded portion, and the heating wire gripper 191b may come into contact with and heat the preliminarily welded portions of the electrode tabs 11a and 12a of the stack. In this case, the temperature condition for performing the heating process may be set by the thermal imaging camera A. More specifically, the temperature condition may be set on the basis of a surface temperature of the stack S made before the stack S is pressed. Unlike FIG. 4, in case that the thickness of the stack S is large, it is impossible to implement the structure in which the heating wire probe 191a attached to the upper pressing block 182 comes into contact with the stack S in advance before the stack S is pressed by the pair of pressing blocks 181 and 182. Therefore, the heating process may be performed by the separate heating wire gripper 191b.

In the present specification, for convenience, the shape of the heating wire gripper is omitted, except for FIG. 5.

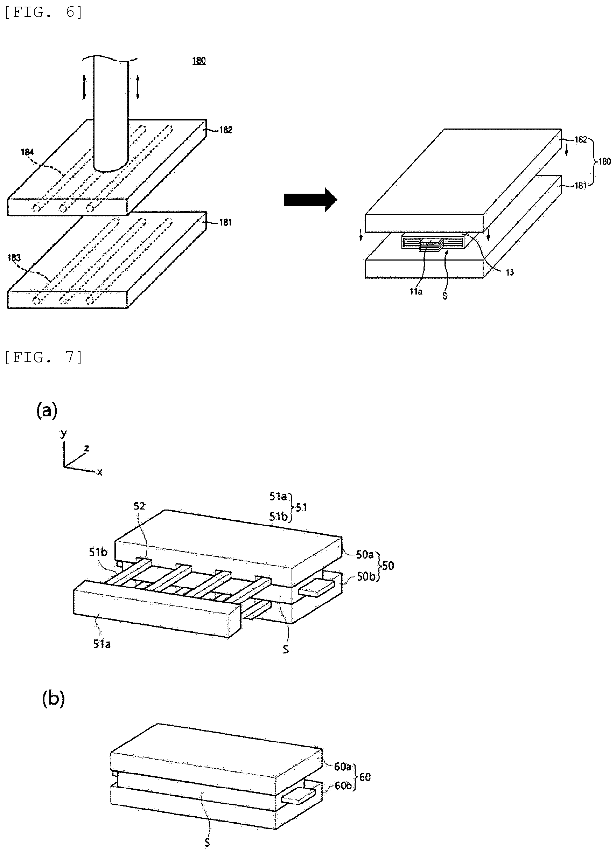

FIG. 6 is a perspective view exemplarily illustrating a state in which the pressing part of the apparatus for manufacturing an electrode assembly according to the embodiment of the present invention presses the stack.

With reference to FIGS. 1, 2, and 6, the electrode assembly 10 may be manufactured by moving the manufactured stack S to the pressing part 180, heating and pressing the stack S by the pressing part 180, and bonding the heated first electrode 11, the heated separator 14, and the heated second electrode 12. In this case, the first electrode 11, the separator 14, and the second electrode 12, which are heated, may be thermally bonded as the pressing part 180 presses the first electrode 11, the separator 14, and the second electrode 12 while applying heat to the first electrode 11, the separator 14, and the second electrode 12.

The apparatus 100 for manufacturing an electrode assembly according to the embodiment of the present invention, which is configured as described above, stacks the first electrode 11, the separator 14, and the second electrode 12 while heating the first electrode 11, the separator 14, and the second electrode 12 and bonds the first electrode 11, the separator 14, and the second electrode 12 by pressing and heating the first electrode 11, the separator 14, and the second electrode 12 by using the pressing part 180. Therefore, it is possible to prevent the electrode assembly 10 from being unfolded and prevent the first electrode 11 and the second electrode 12 from deviating from the stacking positions on the electrode assembly 10.

More specifically, the pressing part 180 may include the pair of pressing blocks 181 and 182, and the stack including the first electrode 11, the separator 14, and the second electrode 12 may be disposed between the pair of pressing blocks 181 and 182. Thereafter, the pair of pressing blocks 181 and 182 may move in the direction in which the pair of pressing blocks 181 and 182 faces each other, and the pressing part 180 may press and heat the stack, thereby bonding the first electrode 11, the separator 14, and the second electrode 12 that are stacked.

Further, the pressing part 180 may further include pressing heaters 183 and 184 configured to heat the pair of pressing blocks 181 and 182, such that the pair of pressing blocks 181 and 182 may heat and press the stack. Therefore, the first electrode 11, the separator 14, and the second electrode 12 in the stack may be thermally bonded more properly and more securely bonded.

Horizontal and vertical lengths of a pressing surface of each of the pair of pressing blocks 181 and 182 may be longer than horizontal and vertical lengths of the stack. Further, the pair of pressing blocks 181 and 182 may include a first pressing block 181 and a second pressing block 182. The first pressing block 181 and the second pressing block 182 may each be provided in the form of a quadrangular block having a rectangular parallelepiped shape.

In addition, the pressing parts may further include the pair of pressing blocks and the pressing heaters configured to heat the pressing blocks. The pair of pressing blocks may surface-press the stack while moving in the direction in which the pair of pressing blocks faces each other, and the pressing heaters may heat the stack.

In this case, in the embodiment of the present invention, the pair of pressing blocks may include the pressing heaters therein.

In the embodiment of the present application, the pressing parts may include the first pressing part and the second pressing part. Specifically, the first and second pressing parts may be applied to the above-mentioned first and second heating/pressing steps, and the above-mentioned contents may be applied.

In the embodiment of the present application, the first pressing part may include a pair of first pressing blocks, pressing surfaces of the pair of first pressing blocks may include grooves corresponding in shape to the gripper, and the pressing surfaces are provided as flat surfaces, except for the groove. That is, the first pressing part may be applied to the above-mentioned first heating/pressing step.

In the embodiment of the present application, the second pressing part may include a pair of second pressing blocks, and pressing surfaces of the pair of second pressing blocks may be provided as flat surfaces. That is, the second pressing part may be applied to the above-mentioned second heating/pressing step.

FIG. 7A is a perspective view illustrating a first pressing part 50 according to the embodiment of the present invention, and FIG. 7B is a perspective view illustrating a second pressing part 60 according to the embodiment of the present invention.

With reference to FIG. 7A, the first pressing part 50 may heat and press the stack S in a state in which the stack S is fixed by a gripper 51. The first pressing part 50 includes a pair of first pressing blocks 50a and 50b. All the pressing surfaces of the pair of first pressing blocks 50a and 50b may be provided as flat surfaces, except for a groove corresponding to a fixing part 51b of the gripper 51.

The gripper 51 may include: a main body 51a provided to correspond to a length x and a height y of the stack S or larger than the length x and the height y of the stack S, and the plurality of fixing parts 51b provided on one surface of the main body 51a and provided in a column or plate shape in a direction of a width z of the stack S. In this case, the length x of the stack S may mean a longest distance between one end and the other end of the stack S. The height y may mean a distance in a stacking direction of the stack S. The width z may mean a distance traversing the upper surface of the stack S.

The position of the fixing part 51b may be adjusted in the height direction of the main body 51a. The fixing part 51b may fix the stack S by coming into contact with the upper and lower surfaces of the stack S. Thereafter, the pair of first pressing blocks 50a and 50b included in the first pressing part 50 may bond the electrodes and the separator, which are included in the stack S, by surface-pressing any one of or both the stack S and the gripper 51 while moving in the direction in which the pair of first pressing blocks 50a and 50b faces each other.

With reference to FIG. 7B, the second pressing part 60 may finally heat and press the stack S primarily heated and pressed by the first pressing part 50. The second pressing part 60 may include a pair of second pressing blocks 60a and 60b, and a pair of pressing blocks 61 and 62 may surface-press the stack S while moving in the direction in which the pair of second pressing blocks 60a and 60b faces each other. In addition, all the pressing surfaces of the pair of second pressing blocks 60a and 60b included in the second pressing part 60, which come into contact with and press the stack S, may be provided as flat surfaces.

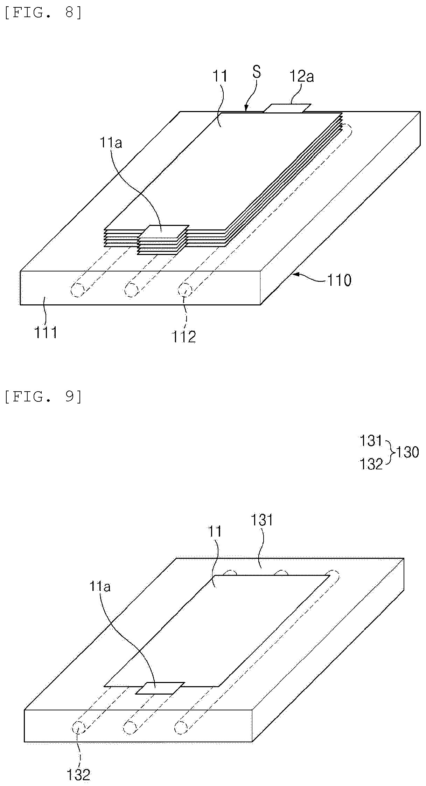

With reference to FIGS. 2 and 8, the first electrodes 11, the separators 14, and the second electrodes 12 may be stacked on the stack table 110 so that the first electrodes 11 and the second electrodes 12 are alternately disposed between the folded separators 14.

In addition, the stack table 110 may include a table body 111 on which the first electrode 11, the separator 14, and the second electrode 12 are stacked, and a stack table heater 112 configured to heat the stacked stack S by heating the table body 111.

The first electrode 11 may be configured as a positive electrode, and the second electrode 12 may be configured as a negative electrode, but the present invention is not necessarily limited thereto. For example, the first electrode 11 may be configured as a negative electrode, and the second electrode 12 may be configured as a positive electrode.

FIG. 9 is a perspective view illustrating the first electrode seating table of the apparatus for manufacturing an electrode assembly according to the embodiment of the present invention.

With reference to FIGS. 2 and 9, the first electrode supply part 130 may supply the first electrode 11 to the first electrode stacking part 150 while heating the first electrode 11.

In addition, the first electrode supply part 130 may include the first electrode seating table 131 on which the first electrode 11 is seated before the first electrode 11 is stacked on the stack table 110 by the first electrode stacking part 150, and a first electrode heater 132 configured to heat the first electrode 11 by heating the first electrode seating table 131.

Meanwhile, the first electrode supply part 130 may further include the first electrode roll 133 around which the first electrode 11 is wound in the form of a sheet, the first cutter 134 configured to form the first electrode 11 having a predetermined size by cutting the first electrode 11 at a predetermined interval when the first electrode 11 wound in the form of the sheet around the first electrode roll 133 is unwound and supplied, the first conveyor belt 135 configured to move the first electrode 11 cut by the first cutter 134, and the first electrode supply head 136 configured to suck the first electrode 11, which is conveyed by the first conveyor belt 135, by vacuum and seat the first electrode 11 on the first electrode seating table 131. In this case, the first cutter 134 may cut the first electrode 11 in the form of a sheet so that a first electrode tab 11a protrudes from the end of the first electrode 11.

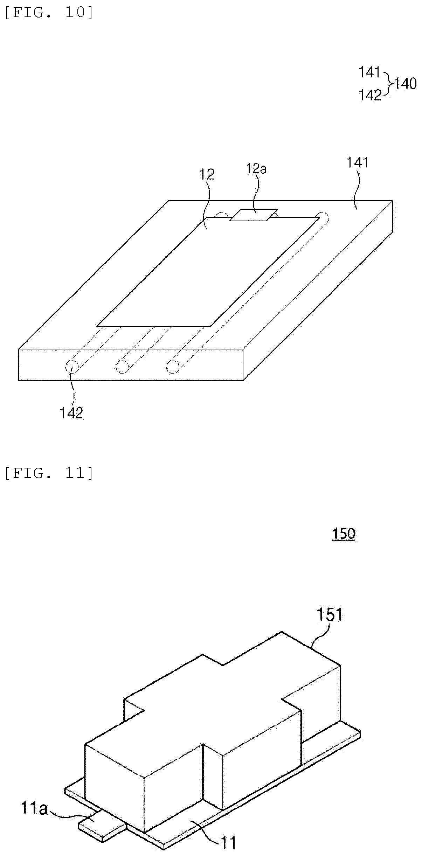

FIG. 10 is a perspective view illustrating the second electrode seating table of the apparatus for manufacturing an electrode assembly according to the embodiment of the present invention.

With reference to FIGS. 2 and 10, the second electrode supply part 140 may supply the second electrode 12 to the second electrode stacking part 160 while heating the second electrode 12.

In addition, the second electrode supply part 140 may include the second electrode seating table 141 on which the second electrode 12 is seated before the second electrode 12 is stacked on the stack table 110 by the second electrode stacking part 160, and a second electrode heater 142 configured to heat the second electrode 12 by heating the second electrode seating table 141.

Meanwhile, the second electrode supply part 140 may further include the second electrode roll 143 around which the second electrode 12 is wound in the form of a sheet, the second cutter 144 configured to form the second electrode 12 having a predetermined size by cutting the second electrode 12 at a predetermined interval when the second electrode 12 wound in the form of a sheet around the second electrode roll 143 is unwound and supplied, the second conveyor belt 145 configured to convey the second electrode 12 cut by the second cutter 144, and the second electrode supply head 146 configured to suck the second electrode 11, which is conveyed by the second conveyor belt 145, by vacuum and seat the second electrode 11 on the second electrode seating table 141. In this case, the second cutter 144 may cut the second electrode 12 in the form of a sheet so that a second electrode tab 12a protrudes from the end of the second electrode 12.

In the embodiment of the present invention, the first electrode stacking part may include a first suction head configured to suck the first electrode seated on the first electrode seating table by vacuum. The second electrode stacking part may include the second suction head configured to suck the second electrode seated on the second electrode seating table by vacuum.

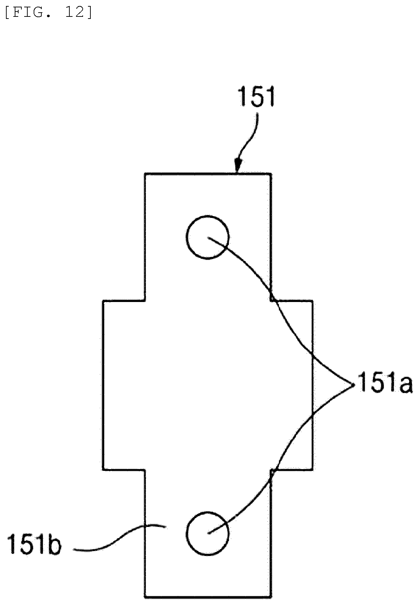

FIG. 11 is a perspective view illustrating the first suction head of the apparatus for manufacturing an electrode assembly according to the embodiment of the present invention, and FIG. 12 is a bottom plan view illustrating the first suction head of the apparatus for manufacturing an electrode assembly according to the embodiment of the present invention.

With reference to FIGS. 1, 2, 11, and 12, the first electrode stacking part 150 may stack the first electrode 11 on the stack table 110.

In addition, the first electrode stacking part 150 may include a first suction head 151 and a first movement part 153.

The first suction head 151 may suck, by vacuum, the first electrode 11 seated on the first electrode seating table 131. In this case, the first suction head 151 has a vacuum inlet 151a formed in a bottom surface 151b and sucks the first electrode 11 through the vacuum inlet 151a, thereby fixing the first electrode 11 on the bottom surface 151b of the first suction head 151. In this case, the first suction head 151 may have therein a passageway that connects the vacuum inlet 151a and a vacuum suction device (not illustrated).

The first movement part 153 may move the first suction head 151 to the stack table 110 so that the first suction head 151 may stack the first electrode 11, which is seated on the first electrode seating table 131, on the stack table 110.

In addition, the second electrode stacking part 160 may stack the second electrode 12 on the stack table 110. In this case, the second electrode stacking part 160 may have the same structure as the first electrode stacking part 150. In this case, the second electrode stacking part 160 may include the second suction head 161 and a second movement part 163.

The second suction head 161 may suck, by vacuum, the second electrode 12 seated on the second electrode seating table 141.

The second movement part 163 may move the second suction head 161 to the stack table 110 so that the second suction head 161 may stack the second electrode 12, which is seated on the second electrode seating table 141, on the stack table 110.

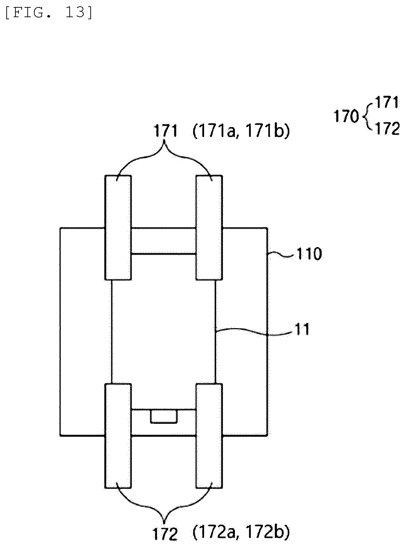

FIG. 13 is a top plan view illustrating the holding mechanism and the stack table of the apparatus for manufacturing an electrode assembly according to the embodiment of the present invention.

With reference to FIGS. 2 and 13, the holding mechanism 170 may hold and fix the first electrode 11 or the second electrode 12 to the stack table 110 at the time of stacking the first electrode 11 or the second electrode 12 on the stack table 110.

In addition, the holding mechanism 170 may press and fix the upper surface of the first electrode 11 stacked at the uppermost side of the stack table 110 at the time of stacking the first electrode 11 on the stack table 110 and press and fix the upper surface of the second electrode 12 stacked at the uppermost side of the stack table 110 at the time of stacking the second electrode 12 on the stack table 110. In addition, the holding mechanism 170 may fix the stack by pressing the upper surface of the stack including the first electrode 11, the separator 14, and the second electrode 12 stacked on the stack table 110.

That is, at the time of forming the stack so that the first electrodes 11 and the second electrodes 12 are stacked to be positioned between the separators 14, the holding mechanism 170 may hold the stack by pressing the surface positioned at the uppermost side of the stack in the direction toward the stack table 110, thereby preventing the stack from separating from the stack table 110.

Meanwhile, for example, the holding mechanism 170 may include a first holding mechanism 171 and a second holding mechanism 172 and fix two opposite sides of the first electrode 11 or the second electrode 12.

Further, an example will be described in which the zigzag folding process is performed as the stack table 110 rotates as described above. When the stack table 110 rotates after the holding mechanism 170 holds the first electrode 11 or the second electrode 12, the separator 14 may be unwound from the separator roll 122 in proportion to the rotation amount of the stack table 110 and supplied to the stack table 110.

Meanwhile, for example, the holding mechanism 170 and the stack table 110 may be connected or coupled to a rotation device (not illustrated). In this case, when the holding mechanism 170 holds the first electrode 11 or the second electrode 12, the rotation device may rotate the holding mechanism 170 and the stack table 110.

Thereafter, when the first electrodes 11 and the second electrodes 12 are completely stacked between the separators 14, the upper and bottom surfaces of the stack may be heated and pressed by the pressing part.

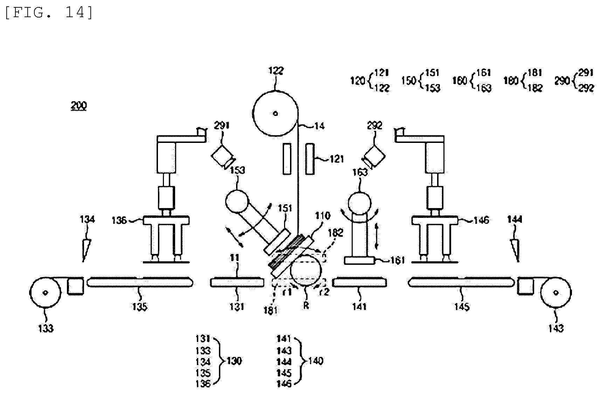

An apparatus for manufacturing an electrode assembly according to another embodiment of the present invention may further include a vision device configured to inspect the first electrode or the second electrode. FIG. 14 is a front view illustrating a concept of the apparatus for manufacturing an electrode assembly that further includes the vision device.

For convenience, the holding mechanism 170, the preliminary welding part 190, and the heating part 191 are omitted from FIG. 14, and the pressing part 180 positioned at the rear side of the top plan view is indicated by the dotted line. In addition, for convenience, a first electrode contactless heater 152 and a second electrode contactless heater 162 are omitted from FIG. 14.

With reference to FIG. 14, an apparatus 200 for manufacturing an electrode assembly may include the stack table 110, the separator supply part 120 configured to supply the separator 14 to the stack table 110, the first electrode supply part 130 configured to supply the first electrode 11 to the stack table 110, the second electrode supply part 140 configured to supply the second electrode 12 to the stack table 110, the first electrode stacking part 150 configured to stack the first electrode 11 on the stack table 110, the second electrode stacking part 160 configured to stack the second electrode 12 on the stack table 110, the pressing part 180 configured to bond the first electrode 11, the separator 14, and the second electrode 12, and the holding mechanism 170 configured to fix the first electrode 11 and the second electrode 12 at the time of stacking the first electrode 11 and the second electrode 12 on the stack table 110 and further include a rotation part R configured to rotate the stack table 110, and a vision device 290 configured to vision-inspect the first electrodes 11 and the second electrodes 12.

That is, the apparatus 200 for manufacturing an electrode assembly in FIG. 14 differs from the apparatus 100 for manufacturing an electrode assembly according to the above-mentioned embodiment in that the apparatus 200 further includes the rotation part R and the vision device 290.

In more detail, in the apparatus 200 for manufacturing an electrode assembly according to another embodiment of the present invention, the vision device 290 may include a first camera 291 and a second camera 292.

The first camera 291 may capture an image of the first electrode 11 seated on the first electrode seating table 131 of the first electrode supply part 130. The second camera 292 may capture an image of the second electrode 12 seated on the second electrode seating table 141 of the second electrode supply part 140.

It is possible to inspect the stacking quality of the first electrode 11 and the second electrode 12 on the basis of image information acquired by the first camera 291 and the second camera 292. In this case, it is possible to inspect seating position, sizes, stacked states, and the like of the first electrode 11 and the second electrode 12.

The rotation part R may rotate the stack table 110 in one direction r1 and the other direction r2. In this case, the first electrode stacking part 150 may be provided at one side of the rotation part R, and the first electrode stacking part 150 may be provided at the other side of the rotation part R.

In addition, the rotation part R may rotate the stack table 110 toward one side so that the stack table 110 faces the first suction head 151 at the time of stacking the first electrode 11. The rotation part R may rotate the stack table 110 toward the other side so that the stack table 110 faces the second suction head 161 at the time of stacking the second electrode 12.

Further, the rotation part R may alternately rotate the stack table 110 in the direction toward the first electrode stacking part 150 and the direction toward the second electrode stacking part 160, such that the separator 14 may be folded in a zigzag manner so as to be positioned between the first electrode 11 and the second electrode 12.

Hereinafter, an operation of the apparatus 200 for manufacturing an electrode assembly according to another embodiment of the present invention will be described.

With reference to FIGS. 1 and 14, the separator 14 wound around the separator roll 122 is supplied while passing through the separator heating part 121. That is, the separator 14 is heated while passing through the separator heating part 121, and the heated separator 14 is supplied to the stack table 110. The separator 14, which is supplied as described above, is stacked on the stack table 110, and the separator 14 is heated by the heated stack table 110.

In addition, when the first electrode 11 is supplied and seated on the first electrode seating table 131 of the first electrode supply part 130, the vision device 290 is used to inspect stacking quality of the first electrode 11. In this case, the first electrode 11 is heated by the first electrode seating table 131 heated by the first electrode heater 132.

Further, when the heated first electrode 11 is supplied to the first electrode stacking part 150, the first electrode stacking part 150 stacks the first electrode 11 on the upper surface of the separator 14 stacked on the stack table 110.

In this case, the holding mechanism 170 presses the upper surface of the first electrode 11, thereby fixing the first electrode 11 so that the first electrode 11 does not separate from the stack table 110. Thereafter, when the rotation part R rotates the stack table 110 in the direction toward the second electrode stacking part 160, the separator 14 is continuously supplied and covers the upper surface of the first electrode 11.

Meanwhile, when the second electrode 12 is supplied and seated on the second electrode seating table 141 of the second electrode supply part 140, the vision device 290 is used to inspect stacking quality of the second electrode 12. In this case, the second electrode 12 is heated by the second electrode seating table 141 heated by the second electrode heater.

Further, when the heated second electrode 12 is supplied to the second electrode stacking part 160, the second electrode stacking part 160 stacks the second electrode 12 on the upper surface of the separator 14 stacked on the stack table 110.

In this case, the holding mechanism 170, which presses the upper surface of the first electrode 11, moves away from the pressing portion and then presses the upper surface of the second electrode 12, thereby preventing the stack including the second electrode 12 from separating from the stack table 110.

Thereafter, the process of stacking the first electrode 11 and the second electrode 12 while rotating the stack table 110 is repeated, such that the separator 14 is folded in a zigzag manner, and the stack may be formed in which the separator 14 is positioned between the first electrode 11 and the second electrode 12.

Further, the electrode assembly 10 may be manufactured by moving the stack to the pressing part 180 and bonding the first electrode 11, the separator 14, and the second electrode 12 which are pressed and heated when the pressing part 180 presses the stack while applying heat to the stack. In this case, the heated first electrode 11, the heated separator 14, and the heated second electrode 12 may be thermally bonded as the pressing part 180 presses the first electrode 11, the separator 14, and the second electrode 12 while applying heat to the first electrode 11, the separator 14, and the second electrode 12 (see FIG. 3).

In addition, even in the case in FIG. 14, the first electrode stacking part 150 may include the first suction head 151, the first electrode contactless heater 152, and the first movement part 153, the second electrode stacking part 160 may include the second suction head 161, the second electrode contactless heater, and the second movement part 163 (not illustrated). The first suction head 151, the first electrode contactless heater 152, the first movement part 153, the second suction head 161, the second electrode contactless heater, and the second movement part 163 are configured as described above.

In other words, it can be said that the apparatus 200 for manufacturing an electrode assembly in FIG. 14 is identical in configuration to the apparatus 100 for manufacturing an electrode assembly according to the above-mentioned embodiment, except that the apparatus 200 further includes the rotation part R and the vision device 290.

For reference, the method of moving the stack table leftward and rightward, the method of moving the separator leftward and rightward, or the method of rotating the stack table may be used to stack the first electrode, the separator, and the second electrode such that the first electrode and the second electrode are alternately disposed between the folded separators. A typical technology in the corresponding field may be applied to this configuration. FIG. 14 may illustrate an example of a way in which the stack table rotates.

In the embodiment of the present invention, a length of a long side of the electrode assembly may be 500 mm or more. The length of the long side of the electrode assembly means a length in a direction perpendicular to the direction in which the separator is supplied during the process of manufacturing the electrode assembly.

In the embodiment of the present invention, for example, the negative electrode current collector has a thickness of 3 to 500 $\mu$m. The negative electrode current collector is not particularly limited as long as the negative electrode current collector exhibits conductivity without inducing any chemical change in a battery. For example, the negative electrode current collector may be made of copper, stainless steel, aluminum, nickel, titanium, or sintered carbon, or made of copper or stainless steel having a surface treated with carbon, nickel, titanium, or silver. Alternatively, the negative electrode current collector may be made of an aluminum-cadmium alloy. In addition, the negative electrode current collector may have a micro-scale uneven pattern formed on the surface thereof so as to increase a binding force of the negative electrode active material in the same manner as the positive electrode current collector to be described below. The negative electrode current collector may be configured in any of various forms, such as a film, a sheet, a foil, a net, a porous body, a foam body, and a non-woven fabric body.

As the negative electrode active material, for example, there may be used carbon, such as a non-graphitizing carbon or a graphite-based carbon; a metal composite oxide, such as $Li_xFe_2O_3$ ($0\leq x\leq1$), $Li_xWO_2$ ($0\leq x\leq1$), $Sn_xMe_{1-x}Me'_yO_z$ (Me: Mn, Fe, Pb, Ge; Me': Al, B, P, Si, Group 1, 2, and 3 elements of the periodic table, halogen; $0<x\leq1$; $1\leq y\leq3$; $1\leq z\leq8$); lithium metal; a lithium alloy; a silicon-based alloy; a tin-based alloy; a metal oxide, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, or $Bi_2O_5$; a conductive polymer, such as polyacetylene; or a Li-Co-Ni based material.

In the embodiment of the present invention, the lower layer region may include natural graphite as a negative electrode active material, and the upper layer region may include artificial graphite as the negative electrode active material.

In the embodiment of the present invention, the lower and upper layer regions may further independently include silicon-based compound as the negative electrode active material.

In the embodiment of the present invention, the silicon-based compound may include one of or both SiOx ($0\leq x\leq2$) and SiC.

In the embodiment of the present invention, the silicon-based compound may include one or more of SiOx (x=0), SiOx ($0\leq x\leq2$), and SiC.

In the embodiment of the present invention, the silicon-based compound may include SiOx (x=0) of 70 parts by weight or more or 80 parts by weight or more based on 100 parts by weight of the silicon-based compound. That is, the negative electrode of the present invention is characterized by a high pure Si content.

In the embodiment of the present invention, the negative electrode may be manufactured by forming a lower layer region by applying lower layer slurry, which includes a lower layer negative electrode active material, onto the current collector and drying the lower layer slurry, and then forming an upper layer region by applying upper layer slurry, which includes an upper layer negative electrode active material onto the lower layer region and drying the upper layer slurry.

That is, the embodiment of the present invention may provide a method of manufacturing a negative electrode, the method including preparing the lower layer slurry including the lower layer negative electrode active material and the upper layer slurry including the upper layer negative electrode active material, coating one surface of the negative electrode current collector with the lower layer slurry and coating the lower layer slurry with the upper layer slurry at the same time or with a predetermined time difference, and forming an active material layer by simultaneously drying the applied lower layer slurry and the applied upper layer slurry.

In this case, there may be a mixing region (intermixing region) in which different types of active materials are mixed at a portion where the lower and upper layer regions of the negative electrode are in contact with each other. This is because if the lower layer slurry containing the lower layer negative electrode active material and the upper layer slurry containing the upper layer negative electrode active material are continuously applied onto the current collector at the same time or with a very short time difference and then dried at the same time to form an active material layer, a predetermined mixing section occurs on the interface where the lower layer slurry and the upper layer slurry are in contact with each other before drying, and then the mixing section becomes a layer form of the mixing region while being dried.

In the embodiment of the present invention, in the active material layer of the negative electrode, the weight ratio (or the ratio of the loading amount per unit area) of the upper layer region and the lower layer region may be 20:80 to 50:50, specifically 25:75 to 50:50.

A thickness of each of the lower and upper layer regions of the active material layer of the negative electrode according to the present invention may not be completely matched with a thickness of the applied lower layer slurry and a thickness of the applied upper layer slurry. However, as a result of the drying or selective rolling process, a ratio of the thickness of each of the lower and upper layer regions of the active material layer of the negative electrode of the negative electrode according to the present invention finally obtained may be matched with a ratio of the thickness of the applied lower layer slurry and the thickness of the applied upper layer slurry.

In the embodiment of the present invention, in the step of coating one surface of the negative electrode current collector with the lower layer slurry and coating the lower layer slurry with the upper layer slurry at the same time or with a predetermined time difference, the predetermined time difference may be 0.6 seconds or less, 0.02 to 0.6 seconds, 0.02 to 0.06 seconds, or 0.02 to 0.03 seconds. Most particularly. the time difference may be 0 second, i.e., the coating processes may be performed at the same time. That is, the time difference is generated during the process of applying the lower layer slurry and the upper layer slurry because of the coating equipment. Therefore, it may be more preferable to apply the lower layer slurry and the upper layer slurry at the same time. In this case, the method of applying the lower layer slurry and the upper layer slurry may use a device such as a double slot die.

In the embodiment of the present invention, the step of forming the active material layer by simultaneously drying the applied lower layer slurry and the applied upper layer slurry may include a step of simultaneously drying the applied lower layer slurry and the applied upper layer slurry, and a step of rolling the active material layer after the step of simultaneously drying the applied lower layer slurry and the applied upper layer slurry. In this case, the step of rolling the active material layer may be performed by a method such as roll pressing typically used in the art and performed at a pressure of 1 to 20 MPa and a temperature of 15 to 30°C. However, the present invention is not limited thereto.

In this case, the step of forming the active material layer by simultaneously drying the applied lower layer slurry and the applied upper layer slurry may be performed by using a device in which a hot air drying device and an infrared drying device are combined, and the step may be implemented by a method typically used in the art.

In the embodiment of the present invention, the weight % of the first binder polymer in the solid content of the lower layer slurry may be equal to or greater than the weight % of the second binder polymer in the solid content of the upper layer slurry.

Specifically, in the embodiment of the present invention, the weight % of the first binder polymer in the solid content of the lower layer slurry may be 1.0 to 4.2 times, 1.5 to 3.6 times, or 1.5 to 3 times of the weight % of the second binder polymer in the solid content of the upper layer slurry.

In this case, in case that a ratio of the weight % of the first binder in the applied lower layer slurry and the weight % of the second binder in the applied upper layer slurry satisfies the above-mentioned range, the binder in the lower layer region is not so small to cause separation of the electrode layer, and because the binder of the upper layer region is not so great, the resistance of the upper layer region of the electrode may be reduced, and it may be advantageous for the fast charging performance.

In the embodiment of the present invention, in the solid content of the lower layer slurry, the weight % of the first binder polymer may be 2 to 30 wt.% or 5 to 20 wt.%, and the proportion (weight %) of the second binder polymer in the solid content of the upper layer slurry may be 0.5 to 20 wt.%, 1 to 15 wt.%, 1 to 10 wt.%, or 2 to 5 wt.%.

In the embodiment of the present invention, a total ratio (weight %) of the first binder polymer and the second binder polymer in the solid content of both the lower layer slurry and the upper layer slurry may be 2 to 20 wt.% or 5 to 15 wt.%.

In the present specification, the first binder polymer and the second binder polymer only mean the binder polymer included in the lower layer slurry and the binder polymer included in the upper layer slurry, but do not mean a particular order.

In the embodiment of the present invention, the binder polymer refers to a component that assists in coupling the electrode active material particles and the conductive material and coupling the electrode current collector. For example, the binder polymer of 1 to 50 wt.% is added based on the total weight of the mixture including the electrode active material. Examples of the binder polymer may include any one binder polymer or two or more types of mixtures of the polymers selected from a group consisting of polyvinylidene fluoride-co-hexafluoropropylene (PVdF), polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxyl methyl cellulose. However, the present invention is not limited thereto.

In the embodiment of the present invention, the negative electrode may be manufactured by applying negative electrode active material particles onto the negative electrode current collector and drying the negative electrode active material particles. As necessary, the negative electrode may further include components such as a conductive material, a binder, and a solvent.

In addition, in the embodiment of the present invention, within the range to which the above-mentioned description is applied, the negative electrode active material used for the negative electrode may be used without limitation as long as the negative electrode active material is an active material publicly known in the art. Further, a method publicly known in the art may be used as the method of manufacturing a negative electrode without limitation within a range to which the above-mentioned description is applied.

In the embodiment of the present invention, the positive electrode may include a positive electrode current collector; and a positive electrode active material layer positioned on at least one surface of the positive electrode current collector and including a positive electrode active material, a binder polymer, and a conductive material.

In the embodiment of the present invention, for example, the positive electrode current collector has a thickness of 3 to 500 $\mu$m. The positive electrode current collector is not particularly limited as long as the positive electrode current collector has conductivity without causing a chemical change in the battery. For example, the positive electrode current collector may be made of stainless steel, aluminum, nickel, titanium, sintered carbon, or aluminum, or made of stainless steel having a surface treated with carbon, nickel, titanium, silver, or the like. In addition, the electrode current collector may have a micro-scale uneven pattern formed on the surface thereof so as to increase a binding force of the positive electrode active material. The electrode current collector may be configured in any of various forms, such as a film, a sheet, a foil, a net, a porous body, a foam body, and a non-woven fabric body.

In the embodiment of the present invention, the positive electrode active material may include lithium intercalation materials selected from: a layered compound such as lithium cobalt oxide (LiCoO$_2$), lithium nickel oxide (LiNiO$_2$) or a compound substituted with one or more transition metals; lithium manganese oxide (LiMnO$_2$), such as a formula Li$_{1+x}$Mn$_{2-x}$O$_4$ (where x is 0 to 0.33), LiMnO$_3$, LiMn$_2$O$_3$, LiMnO$_2$; lithium copper oxide (Li$_2$CuO$_2$); vanadium oxide such as LiV$_3$O$_8$, LiFe$_3$O$_4$, V$_2$O$_5$, Cu$_2$V$_2$O$_7$; lithiated nickel oxide represented by the formula LiNi$_{1-x}$M$_x$O$_2$ (where M=Co, Mn, Al, Cu, Fe, Mg, B or Ga, and x=0.01 to 0.3); lithium manganese composite oxide represented by the formula LiMn$_{2-x}$M$_x$O$_2$ (where M=Co, Ni, Fe, Cr, Zn or Ta, and x=0.01 to 0.1) or Li$_2$Mn$_3$MO$_8$ (where M=Fe, Co, Ni, Cu or Zn); LiMn$_2$O$_4$ in which a part of lithium is substituted with an alkaline earth metal ion; disulfide compounds; Fe$_2$(MoO$_4$)$_3$; or a composite oxide formed by a combination thereof, as a main component. However, the present invention is not limited thereto.

In the embodiment of the present invention, the conductive material of 1 to 50 wt.% is added based on a total weight of a mixture including the positive electrode active material. The conductive material is not particularly limited as long as the conductive material has high conductivity without causing a chemical change in the battery. For example, conductive materials selected from: graphite such as natural graphite and artificial graphite; carbon black such as carbon black, acetylene black, Ketjen black, channel black, furnace black, lamp black, and thermal black; conductive fibers such as carbon fibers and metal fibers; metal powders such as carbon fluoride, aluminum, and nickel powder; conductive whiskeys such as zinc oxide and potassium titanate; conductive oxides such as titanium oxide; polyphenylene derivatives, and the like may be used as the conductive material.

In the embodiment of the present invention, the positive electrode may be manufactured by applying positive electrode active material particles onto the positive electrode current collector and drying the positive electrode active material particles. As necessary, the positive electrode may further include components such as a conductive material, a binder, and a solvent.

In addition, in the present invention, the positive electrode active material used to manufacture the positive electrode may be used without limitation as long as the positive electrode active material is an active material publicly known in the art. Further, a method publicly known in the art may be used as the method of manufacturing a positive electrode without limitation.

In the embodiment of the present invention, non-restrictive examples of the solvent used to manufacture the negative electrode, i.e., the electrode include acetone, tetrahydrofuran, methylene chloride, chloroform, dimethylformamide, N-methyl-2-pyrrolidone (NMP), cyclohexane, water, or a mixture thereof. These solvents provide an appropriate level of viscosity so that a slurry coating layer may be formed at a desired level on the surface of the electrode current collector.

In the embodiment of the present invention, the separator may include a porous polymer substrate and an organic/inorganic composite porous coating layer formed on at least one side surface of the polymer substrate. The organic/inorganic composite porous coating layer may include particulate binder resins and inorganic particles.

Typical materials used in the art may be used as the materials used for the separator.

In addition, the descriptions related to the configurations of the apparatus for manufacturing an electrode assembly and the manufacturing apparatus according to the present invention may also be applied to the manufacturing method according to the present invention and the electrode assembly manufactured by the manufacturing method according to the present invention.

While the embodiments of the present invention have been described above, the scope of the present invention is not limited to, and it will be obvious to those skilled in the art to which the present invention pertains that various modifications and alterations may be made without departing from the technical spirit of the present invention.

**Claims**

1. A method of manufacturing an electrode assembly, in which a plurality of first electrodes including first electrode tabs and a plurality of second electrodes including second electrode tabs are alternately disposed between separators including folded binder layers, the method comprising:

     (a) supplying the first electrode to a stack table;
     (b) supplying the second electrode to the stack table;
     (c) supplying the separator to the stack table;
     (d) manufacturing a stack by stacking the first electrodes, the separators, and the second electrodes on the stack table so that the first electrodes and the second electrodes are alternately disposed between the folded separators;
     (e) preliminarily welding the first electrode tabs and the second electrode tabs;
     (f) heating the first electrodes and the second electrodes by heating preliminarily welded portions of the first electrode tabs and preliminarily welded portions of the second electrode tabs; and
     (g) heating and pressing the stack.

2. The method of claim 1, wherein in step (f), the first electrodes and the second electrodes are heated so that temperatures of the first electrodes and the second electrodes satisfy Expression 1 below;

[Expression 1]

$$Tg-1 < T \leq Tg+1$$

in Expression 1, Tg represents a glass transition temperature of the binder layer of the separator, and T represents a temperature of the heated first electrode or the heated second electrode.

3. The method of claim 1, wherein step (f) comprises:

     measuring a temperature distribution on an upper surface of the stack;
     setting a heating temperature on the basis of the measured temperature distribution; and
     heating the first electrode and the second electrode.

4. The method of claim 1, wherein in step (f), the first electrode tab and the second electrode tab are heated as a heating wire probe or a heating wire gripper comes into contact with the first electrode tab and the second electrode tab.

5. The method of claim 1, further comprising: cutting a part of the preliminarily welded portion of the first electrode tab and a part of the preliminarily welded portion of the second electrode tab after step (g).

6. The method of claim 1, wherein step (e) is performed on the stack table.

7. The method of claim 1, further comprising: performing final welding to connect electrode leads to the first electrode tabs and the second electrode tabs after step (f).

8. The method of claim 1, wherein step (f) and step (g) are selectively performed sequentially, in the reverse order, or simultaneously.

9. The method of claim 4, wherein heat generated from the heating wire probe or the heating wire gripper is transferred to the first electrode and the second electrode through the first electrode tab and the second electrode tab.

10. An apparatus for manufacturing an electrode assembly, which manufactures an electrode assembly in which a plurality of first electrodes including first electrode tabs and a plurality of second electrodes including second electrode tabs are alternately disposed between separators including folded binder layers, the apparatus comprising:

     a stack table on which the first electrodes, the separators, and the second electrodes are stacked so that the stack in which the first electrodes and the second electrodes are alternately disposed between the folded separators is manufactured;

a separator supply part configured to supply the separator to the stack table;

a first electrode supply part configured to supply the first electrode to the stack table;

a second electrode supply part configured to supply the second electrode to the stack table;

a pressing part configured to heat and press the stack stacked on the stack table;

a preliminary welding part configured to preliminarily weld the first electrode tabs and the second electrode tabs; and

a heating part configured to heat the first electrodes and the second electrodes by heating preliminarily welded portions of the first electrode tabs and preliminarily welded portions of the second electrode tabs.

11. The apparatus of claim 10, wherein temperatures of the first electrodes and the second electrodes heated by the heating part satisfy Expression 1 below;

[Expression 1]

$$Tg-1 < T \leq Tg+1$$

in Expression 1, Tg represents a glass transition temperature of the binder layer of the separator, and T represents a temperature of the heated first electrode or the heated second electrode.

12. The apparatus of claim 10, further comprising:
a heating control part configured to measure a temperature distribution on an upper surface of the stack and set a heating temperature condition before the heating process is performed by the heating part.

13. The apparatus of claim 10, wherein the heating part is a heating wire probe or a separate heating wire gripper attached to one surface of the pressing part.

14. The apparatus of claim 10, wherein the pressing part comprises a pair of pressing blocks, and the pair of pressing blocks surface-press the stack stacked on the stack table while moving in a direction in which the pair of pressing blocks faces each other.

...

[FIG. 1]

[FIG. 2]

[FIG. 3]

[FIG. 4]

[FIG. 5]

[FIG. 6]

[FIG. 7]

(a)

(b)

[FIG. 8]

[FIG. 9]

[FIG. 10]

141 ⎱ 140
142 ⎰

141

12   12a

142

[FIG. 11]

150

151

11a

11

[FIG. 12]

151

151a

151b

[FIG. 13]

[FIG. 14]

## INTERNATIONAL SEARCH REPORT

| International application No. |
|---|
| **PCT/KR2023/013003** |

### A. CLASSIFICATION OF SUBJECT MATTER

**H01M 10/0583**(2010.01)i; **H01M 50/536**(2021.01)i; **H01M 10/04**(2006.01)i; **H01M 10/052**(2010.01)i

According to International Patent Classification (IPC) or to both national classification and IPC

### B. FIELDS SEARCHED

Minimum documentation searched (classification system followed by classification symbols)

H01M 10/0583(2010.01); H01M 10/04(2006.01); H01M 2/26(2006.01); H01M 50/528(2021.01); H01M 50/531(2021.01); H01M 50/572(2021.01); H01M 50/59(2021.01); H01R 4/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 조립체(battery assembly), 스택 테이블(stack table), 용접(welding), 전극 탭 (electrode tab), 가열(heating)

### C. DOCUMENTS CONSIDERED TO BE RELEVANT

| Category* | Citation of document, with indication, where appropriate, of the relevant passages | Relevant to claim No. |
|---|---|---|
| A | KR 10-2020-0023853 A (LG CHEM, LTD.) 06 March 2020 (2020-03-06)<br>See claim 1. | 1-14 |
| A | KR 10-2008-0047634 A (LG CHEM, LTD.) 30 May 2008 (2008-05-30)<br>See paragraph [0012]; and figure 2. | 1-14 |
| A | KR 10-2021-0016425 A (BYD COMPANY LIMITED) 15 February 2021 (2021-02-15)<br>See entire document. | 1-14 |
| A | KR 10-2019-0143302 A (LG CHEM, LTD.) 30 December 2019 (2019-12-30)<br>See entire document. | 1-14 |
| A | US 2016-0260952 A1 (KOKAM CO., LTD.) 08 September 2016 (2016-09-08)<br>See entire document. | 1-14 |

☐ Further documents are listed in the continuation of Box C.  ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 December 2023** | **19 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/013003**

| Patent document cited in search report | | | Publication date (day/month/year) | Patent family member(s) | | | Publication date (day/month/year) |
|---|---|---|---|---|---|---|---|
| KR | 10-2020-0023853 | A | 06 March 2020 | KR | 10-2578204 | B1 | 14 September 2023 |
| KR | 10-2008-0047634 | A | 30 May 2008 | KR | 10-1029020 | B1 | 14 April 2011 |
| KR | 10-2021-0016425 | A | 15 February 2021 | CN | 110556500 | A | 10 December 2019 |
| | | | | EP | 3806195 | A1 | 14 April 2021 |
| | | | | EP | 3806195 | A4 | 14 July 2021 |
| | | | | JP | 2021-525943 | A | 27 September 2021 |
| | | | | US | 2021-0210823 | A1 | 08 July 2021 |
| | | | | WO | 2019-228200 | A1 | 05 December 2019 |
| KR | 10-2019-0143302 | A | 30 December 2019 | CN | 111344881 | A | 26 June 2020 |
| | | | | EP | 3699981 | A1 | 26 August 2020 |
| | | | | EP | 3699981 | A4 | 24 March 2021 |
| | | | | KR | 10-2601624 | B1 | 10 November 2023 |
| | | | | US | 11721839 | B2 | 08 August 2023 |
| | | | | US | 2020-0343519 | A1 | 29 October 2020 |
| | | | | WO | 2019-245137 | A1 | 26 December 2019 |
| US | 2016-0260952 | A1 | 08 September 2016 | KR | 10-2016-0107643 | A | 19 September 2016 |
| | | | | KR | 10-2017-0101857 | A | 06 September 2017 |
| | | | | US | 10056597 | B2 | 21 August 2018 |

Form PCT/ISA/210 (patent family annex) (July 2022)

**EP 4 621 916 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220157594